# EUROPEAN PATENT SPECIFICATION

(11) **EP 4 624 214 B1**
(45) Date of publication and mention of the grant of the patent: **23.09.2026**
(21) Application number: 25156143.7
(22) Date of filing: 06.02.2025
(51) Int. Cl.: B60K 1/04

(54) **LOWER VEHICLE-BODY STRUCTURE OF VEHICLE**
UNTERE FAHRZEUGKAROSSERIESTRUKTUR EINES FAHRZEUGS
STRUCTURE INFÉRIEURE DE CARROSSERIE DE VÉHICULE

(30) Priority: 25.03.2024 JP 2024048552
(43) Date of publication of application: 01.10.2025
(73) Proprietor: MAZDA MOTOR CORPORATION, Hiroshima 730-8670 (JP)
(72) Inventor: Kamemoto, Eiji, Aki-gun, Hiroshima 730-8670 (JP); Yotsuyanagi, Taiki, Aki-gun, Hiroshima 730-8670 (JP); Ishikawa, Tatsuya, Aki-gun, Hiroshima 730-8670 (JP); Nishimura, Yoshikazu, Aki-gun, Hiroshima 730-8670 (JP); Tashiro, Kuniyoshi, Aki-gun, Hiroshima 730-8670 (JP); Miyazaki, Masayuki, Aki-gun, Hiroshima 730-8670 (JP); Michimoto, Taiga, Aki-gun, Hiroshima 730-8670 (JP)
(74) Representative: Lorenz Seidler Gossel Part. mbB

(56) References cited:
- EP-B1- 2 766 247
- US-A1- 2022 016 966
- US-B2- 11 370 287

## Description

### [Technical Field]

The present invention relates to a lower vehicle-body structure of a vehicle, and particularly to a lower vehicle-body structure of a vehicle in which a battery is disposed below a floor panel.

### [Background Art]

In recent years, battery electric vehicles (BEV), hybrid electric vehicles (HEV), and other electric vehicles have been rapidly becoming popular. In such electric vehicles, a large-sized battery is mounted below a floor panel. Patent Literature 1 discloses a vehicle in which seat frames are fixed to a housing of a battery mounted below a floor panel.

The vehicle disclosed in Patent Literature 1 includes vehicle-body-side cross members and battery-side cross members, the vehicle-body-side cross members connecting side sills with a center tunnel in the vehicle width direction on the floor panel, the battery-side cross members being provided on the lower side of the lid body of a battery housing, and extending in the vehicle width direction. Of the seat frames, each inner seat frame located on the vehicle-width-direction inner side is fixed to the center tunnel, and is fixed to the vehicle-body-side cross members by fastening using bolts. Each outer seat frame located on the vehicle-width-direction outer side is fixed to the side sill, and is fixed to the vehicle-body-side cross members by fastening using the bolts.

US 2022/016966 A1 discloses an energy storage underbody for a motor car body-in-white.

The battery-side cross members are fixed to the inner and outer seat frames by fastening using the bolts.

### [Citation List]

### [Patent Literature]

[Patent Literature 1] Japanese Patent Laid-Open No. 2021-59141

### [Summary of Invention]

### [Problem to be Solved by the Invention]

It is considered difficult for the above-mentioned vehicle disclosed in Patent Literature 1 to both ensure safety when a collision load is input and ensure the degree of freedom in design relating to arrangement of seats in a vehicle cabin. Specifically, in the above-mentioned vehicle disclosed in Patent Literature 1, at intersecting parts between the inner and outer seat frames and the vehicle-body-side cross members, the top plate parts of the seat frames are disposed in such a way as to cover the vehicle-body-side cross frames from above. In addition, each inner seat frame is fixed to the center tunnel, and each outer seat frame is fixed to the side sill. Therefore, when attempting to ensure a certain height of the vehicle-body-side cross members in order to ensure safety at the time of inputting of a collision load, the height position of the seat frames is increased. As described above, it is considered difficult for the above-mentioned vehicle disclosed in Patent Literature 1 to set the seat frames at a low position while ensuring the height of the vehicle-body-side cross members which is required to ensure safety.

It is also considered that the positions of the seat frames in the vehicle width direction have a low degree of freedom in design due to the relationship with the center tunnel and the side sills. That is, in the case in which the seat frames are caused to be distant from the center tunnel or the side sills, there is no choice but to have a large distance between the seat frames in the vehicle width direction and hence, it is considered that the seats attached to the seat frames may have a problem from the viewpoint of stability.

The present invention has been made to solve the above-mentioned problem, and it is an object of the present invention to provide a lower vehicle-body structure of a vehicle that can both ensure safety when a collision load is input, and ensure a high degree of freedom in design relating to arrangement of seats in a vehicle cabin.

### [Means for Solving the Problem]

A lower vehicle-body structure of a vehicle according to one aspect of the present invention includes: a floor panel that constitutes a floor of a vehicle cabin of the vehicle; a vehicle seat that includes a seat rail disposed on the floor panel; an outer skeleton portion that is formed to extend in a first direction, and that is disposed below the floor panel, the first direction being either one of a front-rear direction of the vehicle or a vehicle width direction; and a battery that includes a battery cell and a battery housing accommodating the battery cell, and that is disposed below the outer skeleton portion.

In the lower vehicle-body structure of a vehicle according to the above-mentioned aspect, the battery housing includes a housing body portion, a lid portion, and an inner skeleton portion, the housing body portion being a casing that includes an outer peripheral wall and that has an opening on an upper side of the casing, the lid portion closing the opening of the housing body portion, the inner skeleton portion extending in a second direction in the housing body portion, and being formed in such a way as to connect opposing portions of the outer peripheral wall, the second direction intersecting with both an up-down direction of the vehicle and the first direction, and the outer skeleton portion is fixed to the inner skeleton portion with the lid portion interposed between the outer skeleton portion and the inner skeleton portion, and is fixed to the seat rail with the floor panel interposed between the outer skeleton portion and the seat rail.

In the lower vehicle-body structure of a vehicle according to the above-mentioned aspect, the outer skeleton portion is disposed between the floor panel and the battery housing, that is, below the floor panel. Accordingly, also in a case in which the height of the outer skeleton portion in cross section is defined in order to ensure rigidity of the vehicle body, there is no possibility of affecting the height position of the seat rail (the height position of the vehicle seat) with respect to the floor panel.

In the lower vehicle-body structure of a vehicle according to the above-mentioned aspect, the seat rail is fixed to the battery housing via the outer skeleton portion. The battery housing is formed to have high rigidity for the purpose of protecting the battery cell, which is housed in the battery housing, from a collision load or the like. Accordingly, in the lower vehicle-body structure of a vehicle according to the above-mentioned aspect, the seat rail is fixed to the battery housing having high rigidity and hence, undesired vibrations or the like of the vehicle seat can be prevented. Therefore, it is possible to achieve excellent riding comfort of the vehicle seat.

In the lower vehicle-body structure of a vehicle according to the above-mentioned aspect, the outer skeleton portion may be integrally formed with the lid portion of the battery housing, or may be formed as a separate body from the lid portion. In the lower vehicle-body structure of a vehicle according to the above-mentioned aspect, the inner skeleton portion may be integrally formed with the housing body portion, or may be formed as a separate body from the housing body portion.

The lower vehicle-body structure of a vehicle according to the above-mentioned aspect may further include a second outer skeleton portion, assuming the outer skeleton portion as a first outer skeleton portion, the second outer skeleton portion being an outer skeleton portion that is disposed between the floor panel and the battery housing, and that is different from the first outer skeleton portion, the second outer skeleton portion extending in the first direction, and being disposed with a distance from the first outer skeleton portion in the second direction, assuming the inner skeleton portion as a first inner skeleton portion, the battery housing may further include a second inner skeleton portion that is disposed in the housing body portion, that extends in the second direction, that is distant from the first inner skeleton portion in the first direction, and that is formed in such a way as to connect the opposing portions of the outer peripheral wall of the housing body portion, the second inner skeleton portion may be fixed to the first outer skeleton portion and the second outer skeleton portion with the lid portion interposed between the second inner skeleton portion and the first outer skeleton portion, and with the lid portion interposed between the second inner skeleton portion and the second outer skeleton portion, and the second outer skeleton portion may be fixed to the first inner skeleton portion with the lid portion interposed between the second outer skeleton portion and the first inner skeleton portion, and may be fixed to the seat rail with the floor panel interposed between the second outer skeleton portion and the seat rail.

The lower vehicle-body structure of a vehicle according to the above-mentioned aspect further includes the second outer skeleton portion, and the battery housing further includes the second inner skeleton member. The first inner skeleton portion and the second inner skeleton portion are fixed to the first outer skeleton portion and the second outer skeleton portion. The first outer skeleton portion is spaced apart from the second outer skeleton portion in the second direction, and the first inner skeleton portion is spaced apart from the second inner skeleton portion in the first direction. Due to such a configuration, in the lower vehicle-body structure of a vehicle according to the above-mentioned aspect, the first outer skeleton portion and the second outer skeleton portion, and the first inner skeleton portion and the second inner skeleton portion of the battery housing constitute a rectangular lattice structure portion when viewed in a plan view from one direction along the up-down direction. Therefore, high rigidity can be ensured under the floor panel and hence, it is possible to ensure high safety in a collision (in a front collision, in a side collision) of a vehicle.

In addition, the seat rail is fixed to the first outer skeleton portion and the second outer skeleton portion. This means that the seat rail is fixed to the above-mentioned rectangular lattice structure portion having high rigidity. Therefore, in the above-mentioned lower vehicle-body structure of a vehicle, undesired vibrations or the like of the vehicle seat are prevented and hence, it is possible to achieve excellent riding comfort of the vehicle seat.

In the lower vehicle-body structure of a vehicle according to the above-mentioned aspect, the outer skeleton portion may be a separate body from the lid portion of the battery housing, and may be directly placed on the lid portion.

In the lower vehicle-body structure of a vehicle according to the above-mentioned aspect, the outer skeleton portion is directly placed on the lid portion of the battery housing, that is, the outer skeleton portion is directly placed on the lid portion configured to expand in directions intersecting with the up-down direction and hence, a load input to the outer skeleton portion in a collision or the like of the vehicle is also dispersed to the lid portion. Therefore, the above-mentioned lower vehicle-body structure of a vehicle has an advantage in ensuring even higher rigidity of the vehicle body.

In the lower vehicle-body structure of a vehicle according to the above-mentioned aspect, the outer skeleton portion is a separate body from the lid portion and hence, it is possible to define the position of the outer skeleton portion relative to the lid portion depending on the layout of the vehicle. Therefore, the lid portion and the outer skeleton portion can be used in common for a plurality of vehicle types and hence, it is possible to achieve a reduction in manufacturing costs.

In the lower vehicle-body structure of a vehicle according to the above-mentioned aspect, the seat rail may be directly placed on the floor panel.

In the lower vehicle-body structure of a vehicle according to the above-mentioned aspect, the seat rail is directly placed on the floor panel. This means that the floor panel is directly interposed between the seat rail and the outer skeleton portion. Therefore, the floor panel is fixed to the outer skeleton portion and the inner skeleton portion which are fixed to each other and hence, membrane vibration of the floor panel is suppressed.

In the lower vehicle-body structure of a vehicle according to the above-mentioned aspect, the first direction may be the vehicle width direction, and the second direction may be the front-rear direction.

The lower vehicle-body structure of a vehicle according to the above-mentioned aspect is configured by assuming the vehicle width direction as the first direction, and the front-rear direction as the second direction. Thus, in a side collision, the outer skeleton portion, in cooperation with the inner skeleton portion, can resist against a collision load input to the outer skeleton portion and, in a front collision, the inner skeleton portion, in cooperation with the outer skeleton portion, can resist against a collision load input to the inner skeleton portion. Therefore, the lower vehicle-body structure of a vehicle according to the above-mentioned aspect can ensure high safety in both of a front collision and a side collision.

In the lower vehicle-body structure of a vehicle according to the above-mentioned aspect, the outer peripheral wall of the housing body portion may be disposed in such a way as to be in contact with or proximate to side sills in the first direction, the side sills being disposed on both sides in the vehicle width direction.

In the lower vehicle-body structure of a vehicle according to the above-mentioned aspect, the outer peripheral wall of the housing body portion of the battery housing is disposed in such a way as to be in contact with or proximate to the side sill and hence, a collision load input to the side sill in a side collision is dispersed to the inner skeleton portion and the outer skeleton portion via the outer peripheral wall of the battery housing. Therefore, the lower vehicle-body structure of a vehicle according to the above-mentioned aspect has an advantage in ensuring high safety in a side collision.

In the lower vehicle-body structure of a vehicle according to the above-mentioned aspect, the outer peripheral wall may include an outwardly-projecting portion that is in contact with or proximate to a lower surface of the side sill.

In the lower vehicle-body structure of a vehicle according to the above-mentioned aspect, the outer peripheral wall of the housing body portion of the battery housing includes the outwardly-projecting portion, and the outwardly-projecting portion is disposed in such a way as to be in contact with or proximate to the lower surface of the side sill and hence, it is possible to suppress vertical movement of the battery during traveling or other movement of the vehicle. In the lower vehicle-body structure of a vehicle according to the above-mentioned aspect, vertical movement of the battery can be suppressed during traveling or other movement of the vehicle and hence, it is possible to suppress membrane vibration of the floor panel which is fixed to the battery housing via the outer skeleton portion. Accordingly, the vehicle according to the above-mentioned aspect can suppress vibrations in the vehicle cabin, thus ensuring high comfort of the occupant.

In the lower vehicle-body structure of a vehicle according to the above-mentioned aspect, the inner skeleton portion may be a separate body from the housing body portion of the battery housing, and may be fixed to the outer peripheral wall of the housing body portion.

In the lower vehicle-body structure of a vehicle according to the above-mentioned aspect, the inner skeleton portion is fixed to the outer peripheral wall of the housing body portion of the battery housing and hence, it is possible to ensure high rigidity of the housing body portion.

In addition, the inner skeleton portion is fixed to the outer peripheral wall of the housing body portion and hence, it is possible to suppress a situation in which the battery cell housed in the battery housing is damaged or the like in a collision of a vehicle.

Further, in the lower vehicle-body structure of a vehicle according to the above-mentioned aspect, the inner skeleton portion is a separate body from the housing body portion and hence, it is possible to define the position of the inner skeleton portion relative to the housing body portion depending on the arrangement of the battery cell in the battery, the shape of the housing body portion, or the like. Therefore, the standardized inner skeleton portion can be fixed to the battery having any of various shapes and hence, it is possible to achieve a reduction in manufacturing costs.

### [Advantageous Effect of Invention]

The lower vehicle-body structure of a vehicle according to the above-mentioned respective aspects can both ensure safety when a collision load is input and ensure a high degree of freedom in design relating to arrangement of seats in a vehicle cabin.

### [Brief Description of Drawings]

FIG. 1 is a plan view showing a portion of a vehicle to which a lower vehicle-body structure according to an embodiment of the present invention is applied.
FIG. 2 is a developed perspective view showing a battery and battery outer cross members.
FIG. 3 is a plan view showing the configuration of a housing body portion of a battery housing.
FIG. 4 is a plan view showing a structure of fixing inner members of the housing body portion to the battery outer cross members.
FIG. 5 is a cross-sectional view showing a structure of fixing a right member of the housing body portion to a side sill.
FIG. 6 is a plan view showing a structure of fixing the battery outer cross members to seat rails.
FIG. 7 is a cross-sectional view showing the structure of fixing the battery outer cross member to the seat rail.

### [Mode for Carrying Out the Invention]

Hereinafter, an embodiment of the present invention will be described with reference to drawings. Modes described hereinafter are merely given as examples of the present invention, and the present invention is not limited at all to the following modes except for the essential configurations.

In drawings used in the description made hereinafter, "FR" indicates the front side of the vehicle, "RR" indicates the rear side of the vehicle, "LH" indicates the left side of the vehicle, "RH" indicates the right side of the vehicle, "UP" indicates the upper side of the vehicle, and "LO" indicates the lower side of the vehicle.

### 1. Configuration of vehicle 1

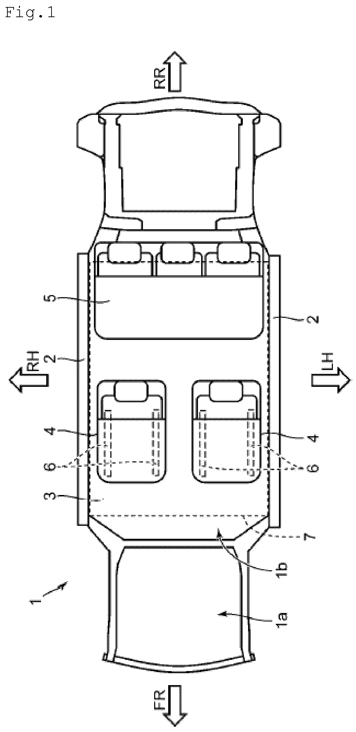

The configuration of a vehicle 1 to which a lower vehicle-body structure according to the present embodiment is applied will be described with reference to FIG. 1. In FIG. 1, the configuration of the vehicle 1 is only partially illustrated, and the illustration of a power train and the like is omitted.

As shown in FIG. 1, the vehicle 1 includes a power train mounting portion 1a at the front portion thereof, and includes a vehicle cabin portion 1b at a location behind the power train mounting portion 1a, the power train being mounted on the power train mounting portion 1a, occupants riding in the vehicle cabin portion 1b. A floor panel 3 is disposed at the lower portion of the vehicle cabin portion 1b. Vehicle seats 4 and 5 are disposed on the floor panel 3. Of the vehicle seats 4 and 5, each front vehicle seat 4 includes seat rails 6 disposed on the floor panel 3. The front vehicle seats 4 are slidable in the front-rear direction within the range in which the seat rails 6 are provided.

Both lateral parts of the floor panel 3 in the vehicle width direction are fixed to side sills 2. Although not particularly illustrated in FIG. 1, a center tunnel may be provided between the left and right vehicle seats 4 disposed on the front side.

A battery 7, which supplies power to the power train, is disposed below the floor panel 3. The vehicle 1 according to the present embodiment is an electric vehicle (BEV), in which a power train includes only a travel-driving motor, or is a hybrid electric vehicle (HEV), in which a power train includes a travel-driving motor and an engine.

### 2. Configurations of battery 7 and components around battery 7

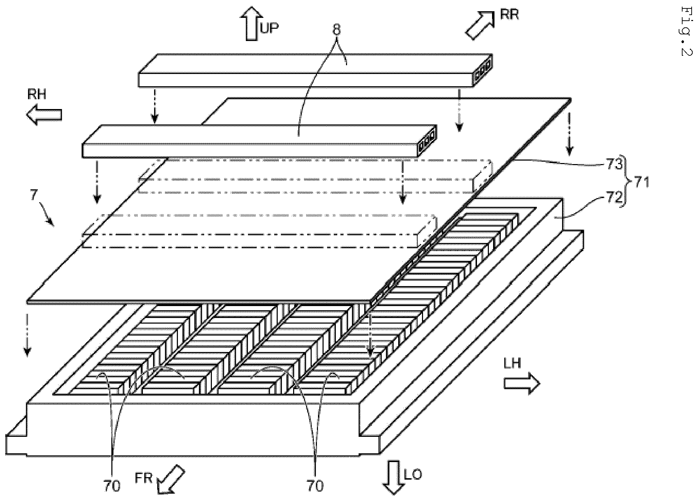

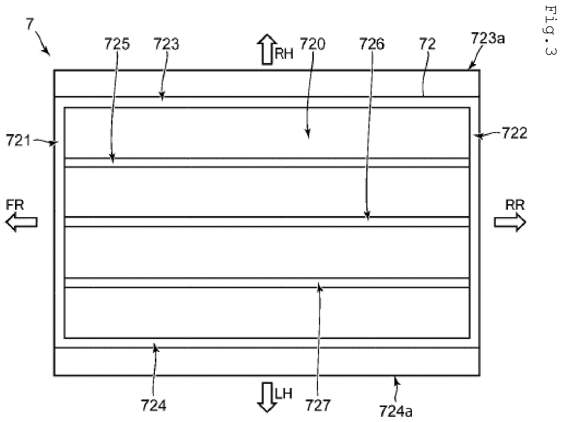

The configuration of the battery 7 disposed below the floor panel 3, and the configurations of components around the battery 7 will be described with reference to FIG. 2 and FIG. 3.

As shown in FIG. 2, the battery 7 includes a plurality of battery cells 70, and a battery housing 71 that accommodates the plurality of battery cells 70, the battery housing 71 having a flat rectangular parallelepiped shape. Each of the plurality of battery cells 70 is a lithium ion battery, a nickel hydrogen battery, or other types of battery. FIG. 2 shows a mode in which each battery cell 70 has a quadrangular exterior. However, the appearance shape of the battery cell 70 is not limited to such a shape, and it is also possible to adopt a battery cell having a cylindrical shape or a laminated exterior (pouch exterior), for example.

The battery housing 71 includes a housing body portion 72 and a lid portion 73, the housing body portion 72 being a casing having an opening on the upper side thereof, the lid portion 73 closing the opening of the housing body portion 72. As shown in FIG. 3, the housing body portion 72 includes members 721 to 724, a plurality of (three in the present embodiment, for example) inner members (inner skeleton portions) 725 to 727, and a bottom panel 720, the members 721 to 724 being outer peripheral walls that constitute a lattice-shaped frame body, the plurality of inner members 725 to 727 being provided to connect the front member 721 with the rear member 722, the bottom panel 720 constituting a bottom portion. As shown in FIG. 2, the plurality of battery cells 70 are accommodated in a space defined by the members 721 to 724 and the inner members 725 to 727.

In an embodiment, the inner members 725 to 727 are each located between two rows of battery cells when viewed in top view. In particular, the battery cells are arranged in the compartments formed between the inner members 725 to 727 or between one of inner members 725, 727 and the adjacent side wall 722, 724.

In an embodiment, the inner members 725 to 727 are placed on a bottom panel of the battery housing body portion 72 and/or connected thereto. In an embodiment, the inner members 725 to 727 are formed integral with the bottom panel.
The inner members 725 to 727 are provided in such a way as to extend in the front-rear direction (second direction) along the members 723 and 724, and are disposed in a spaced-apart manner in the vehicle width direction (first direction).
As shown in FIG. 2, the upper surfaces of the inner members 725 to 727 are located at a position lower than the upper surfaces of the members 721 to 724, which constitute the frame body. Due to such a configuration, when the opening of the housing body portion 72 is closed by the lid portion 73, the upper surfaces of the inner members 725 to 727 do not directly come into contact with the lower surface of the lid portion 73.

The lid portion 73 is fixed to the members 721 to 724 and the inner members 725 to 727 in a state of being disposed in such a way as to close the opening of the housing body portion 72.

Two battery outer cross members (outer skeleton portion) 8 are placed on the lid portion 73. The two battery outer cross members 8 are provided in such a way as to extend in the vehicle width direction (first direction), and are disposed in a spaced-apart manner in the front-rear direction (second direction). In the present embodiment, the battery outer cross members 8 are separate bodies from the lid portion 73, and are directly placed on the lid portion 73. That is, the battery outer cross members 8 are disposed between the lid portion 73 and the floor panel 3.

Although the battery outer cross members 8 are constituted as separate bodies from the lid portion 73 in the present embodiment, the battery outer cross members 8 may be integrally formed with the lid portion 73. The inner members 725 to 727 may be fixed by welding or by fastening or the like using bolts to the front member 721 and the rear member 722, of the members 721 to 724 which constitute the frame body. In addition, the inner members 725 to 727 and the members 721 to 724 may be integrally formed.

### 3. Fixing of battery outer cross members 8 to inner members 725 to 727

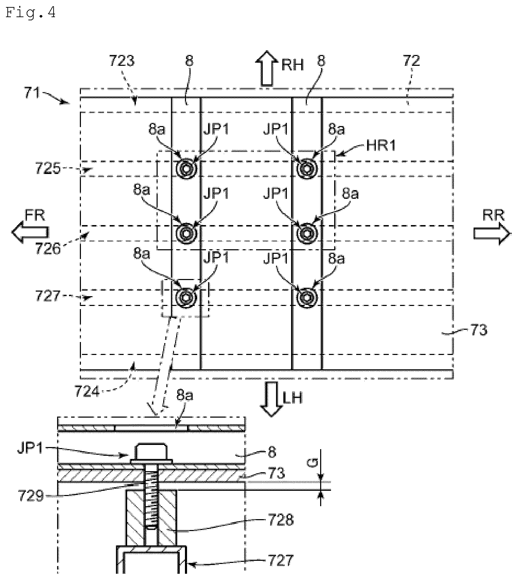

A mode of fixing the battery outer cross members 8 to the inner members 725 to 727 will be described with reference to FIG. 4. FIG. 4 is a plan view showing the battery outer cross members 8 and the inner members 725 to 727 which are fixed to each other with the lid portion 73 interposed between the battery outer cross members 8 and the inner members 725 to 727.

As shown in FIG. 4, the two battery outer cross members 8 are disposed in such a way as to be distant from each other in the front-rear direction. In contrast, the plurality of inner members 725 to 727 are disposed in such a way as to be distant from each other in the vehicle width direction. The battery outer cross members 8 and the inner members 725 to 727 are disposed such that the battery outer cross members 8 are substantially orthogonal to the inner members 725 to 727 when viewed in a plan view.

The battery outer cross members 8 are fixed to the inner members 725 to 727 at intersecting portions between the battery outer cross members 8 and the inner members 725 to 727. Specifically, as shown in a cross section part in FIG. 4, collars 728 are fixed to the upper side of each of the inner members 725 to 727 (only the inner member 727 being illustrated in the cross section part). Each collar 728 has a female screw thread formed in such a way as to extend downward from the upper end surface of the collar 728. Bolts 729 inserted from opening portions 8a provided at the upper portion of each battery outer cross member 8 are fastened to the female screws of the collars 728. With such fastening, the battery outer cross members 8 are fixed to the inner members 725 to 727 at the intersecting portions between the battery outer cross members 8 and the inner members 725 to 727 (fixed portions JP1).

By fixing the battery outer cross members 8 to the inner members 725 to 727 at the fixed portions JP1 as described above, the battery outer cross members 8 and the inner members 725 to 727 constitute a lattice structure portion (rectangular lattice structure portion) HR1 having a rectangular shape when viewed in a plan view.

As shown in the cross section part in FIG. 4, in the present embodiment, a gap G is formed between the upper surface of the collar 728 and the lower surface of the lid portion 73. Such a configuration is adopted to certainly fix the battery outer cross members 8 to the inner members 725 to 727 by causing a fastening force to act between the battery outer cross members 8 and the inner members 725 to 727 also in the case in which manufacturing errors occur in the inner members 725 to 727, the collar 728, or the like. In addition, such a configuration can prevent the generation of abnormal sound caused by the collar 728 and the lid portion 73 coming into contact with or separating from each other due to the effect of vibrations or the like during traveling of the vehicle 1.

### 4. Arrangement of battery housing 71 on side sills 2

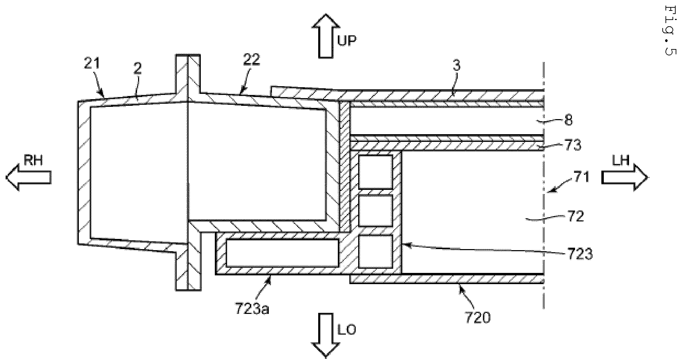

A mode of disposing the battery housing 71 on the side sills 2 will be described with reference to FIG. 5. Although FIG. 5 illustrates the side sill 2 on the right side of the vehicle body, and the right part of the battery housing 71, the same configuration is also adopted for the arrangement of the side sill 2 on the left side of the vehicle body and the left part of the battery housing 71.

As shown in FIG. 5, the end portion of the floor panel 3 in the vehicle width direction is fixed in a state of being placed on the upper surface of the side sill 2. The side sill 2 is constituted by fixing a pair of constituting members 21 and 22 to each other, each of the pair of constituting members 21 and 22 having a hat shape. The floor panel 3 is fixed to the constituting member 22 that constitutes the side sill 2, and that is disposed on the vehicle-width-direction inner side.

Each battery outer cross member 8 is disposed in a state of being interposed between the floor panel 3 and the battery housing 71 in the up-down direction. The end portion of the battery outer cross member 8 in the vehicle width direction is disposed in such a way as to be in contact with or proximate to the inner side surface of the constituting member 22 of the side sill 2.

The housing body portion 72 of the battery housing 71 is also disposed in such a way as to be in contact with or proximate to the constituting member 22 of the side sill 2. Of the outer peripheral walls of the housing body portion 72, each of the left and right members 723 and 724 (see FIG. 3) includes an outwardly-projecting portion 723a that protrudes outward in the vehicle width direction, and that is in contact with or proximate to the lower surface of the constituting member 22 of the side sill 2.

### 5. Fixing of seat rail 6 to battery outer cross member 8 with floor panel 3 interposed therebetween

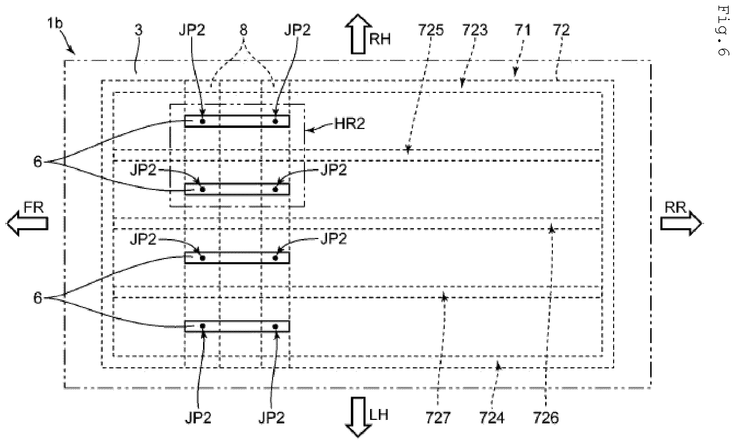

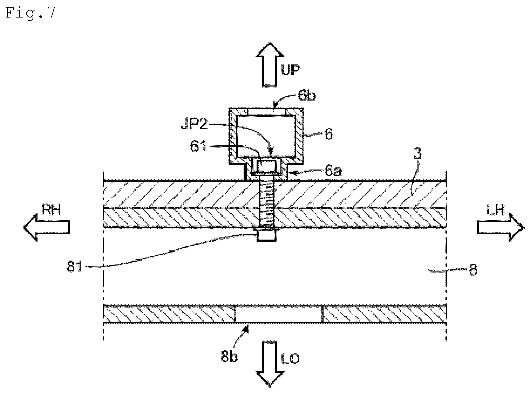

A mode of fixing the seat rails 6 to the battery outer cross members 8 with the floor panel 3 interposed therebetween will be described with reference to FIG. 6 and FIG. 7.

As shown in FIG. 6, the two battery outer cross members 8 are disposed in such a way as to be distant from each other in the front-rear direction. In contrast, four seat rails 6 are disposed in such a way as to be distant from each other in the vehicle width direction. The battery outer cross members 8 and the seat rails 6 are disposed such that the battery outer cross members 8 are substantially orthogonal to the seat rails 6 when viewed in a plan view.

The battery outer cross members 8 are fixed to the seat rails 6 at intersecting portions between the battery outer cross members 8 and the seat rails 6. Specifically, as shown in FIG. 7, each seat rail 6 includes a projecting portion 6a protruding downward, and is fixed to the battery outer cross member 8 by bolts 61 each of which penetrates through the floor panel 3 from the inner side of the projecting portion 6a, and then reaches the battery outer cross member 8. Each bolt 61 is inserted from an opening portion 6b provided at the upper portion of the seat rail 6, and is threadedly engaged with a nut 81 inserted from an opening portion 8b provided at the lower portion of the battery outer cross member 8. With such engagement, the battery outer cross members 8 are fixed to the seat rails 6 at the intersecting portions between the battery outer cross members 8 and the seat rails 6 (fixed portions JP2).

In the present embodiment, although the respective seat rails 6 are disposed between the members 721 to 724 and the inner members 725 to 727 of the housing body portion 72 in the vehicle width direction, the arrangement of the seat rails 6 is determined by the arrangement of the vehicle seats 4 in the vehicle cabin portion 1b. Therefore, the respective seat rails 6 are not always disposed between the members 721 to 724 and the inner members 725 to 727 in the vehicle width direction.

By fixing the battery outer cross members 8 to the seat rails 6 at the fixed portions JP2 as described above, the battery outer cross members 8 and the seat rails 6 constitute a lattice structure portion (rectangular lattice structure portion) HR2 having a rectangular shape when viewed in a plan view.
In an embodiment of the present invention, the lower vehicle-body structure is manufactured by the following steps:
First, the outer skeleton portion 8 is placed below the floor panel 3, the seat rail is placed on top of the floor panel, and the seat rail 6 is connected to the outer skeleton portion 8 with the floor panel 3 interposed between the outer skeleton portion 8 and the seat rail 6.
Then, the battery casing including the inner skeleton portion is placed below the outer skeleton portion 8, and the outer skeleton portion 8 is connected to the inner skeleton portion 725 - 727 with the lid portion 73 interposed between the outer skeleton portion 8 and the inner skeleton portion 725 - 727. In an embodiment, the outer skeleton portion 8 is connected to the inner skeleton portion 725 - 727 by a bolt 729 inserted through an opening in the floor panel 3.

### 6. Advantageous effect

In the vehicle 1 to which the lower vehicle-body structure according to the present embodiment is applied, the battery outer cross members (outer skeleton portions) 8 is disposed between the floor panel 3 and the battery housing 71, that is, below the floor panel 3. Accordingly, also in a case in which the height of the battery outer cross member 8 in cross section is defined in order to ensure rigidity of the vehicle body, there is no possibility of affecting the height position of the seat rails 6 (the height position of the vehicle seats 4) with respect to the floor panel 3.

In the vehicle 1, the seat rails 6 are fixed to the inner members 725 to 727 of the battery housing 71 via the battery outer cross members 8. In the vehicle 1, the seat rails 6 are fixed to the inner members 725 to 727 of the battery housing 71 and hence, undesired vibrations or the like of the vehicle seats 4 can be prevented. Therefore, it is possible to achieve excellent riding comfort of the vehicle seats 4.

In the present embodiment, the battery outer cross members 8 are separate bodies from the lid portion 73 of the battery housing 71. However, the battery outer cross members 8 may be integrally formed with the lid portion 73. In addition, in the present embodiment, the inner members (inner skeleton portions) 725 to 727 are formed as separate bodies from the housing body portion 72, and are fixed to each other. However, the inner members 725 to 727 may be integrally formed with the housing body portion 72.

The vehicle 1 to which the lower vehicle-body structure according to the present embodiment is applied includes the two battery outer cross members (the first outer skeleton portion and the second outer skeleton portion) 8 as the outer skeleton portions. The three inner members (including the first inner skeleton portion and the second inner skeleton portion) 725 to 727 are fixed to the two battery outer cross members 8. The two battery outer cross members 8 are disposed in such a way as to be spaced apart from each other in the front-rear direction (second direction), and the three inner members 725 to 727 are disposed in such a way as to be spaced apart from each other in the vehicle width direction (first direction). Due to such a configuration, in the vehicle 1, the two battery outer cross members 8 and the three inner members 725 to 727 of the battery housing 71 constitute the rectangular lattice structure portion HR1 (see FIG. 4) when viewed in a plan view from one direction along the up-down direction. Therefore, high rigidity can be ensured under the floor panel 3 and hence, it is possible to ensure high safety in a collision (in a front collision, in a side collision) of a vehicle.

In addition, the seat rails 6 are fixed to the two battery outer cross members 8. This means that the seat rails 6 are fixed to the above-mentioned rectangular lattice structure portion HR1 having high rigidity. Therefore, in the vehicle 1, undesired vibrations or the like of the vehicle seats 4 are prevented and hence, it is possible to achieve excellent riding comfort of the vehicle seats 4.

In the vehicle 1 to which the lower vehicle-body structure according to the present embodiment is applied, the two battery outer cross members 8 are directly placed on the lid portion 73 of the battery housing 71 and hence, a load input to the battery outer cross members 8 in a collision or the like of the vehicle is dispersed to the lid portion 73, which extends in directions intersecting with the vehicle up-down direction. Therefore, the vehicle 1 has an advantage in ensuring even higher rigidity of the vehicle body.

In the vehicle 1, the battery outer cross members 8 are provided as separate bodies from the lid portion 73 and hence, it is possible to define the position of the battery outer cross members 8 relative to the lid portion 73 depending on the layout of the vehicle 1. Therefore, the lid portion 73 and the battery outer cross members 8 can be used in common for a plurality of vehicle types and hence, it is possible to achieve a reduction in manufacturing costs.

In the vehicle 1 to which the lower vehicle-body structure according to the present embodiment is applied, the seat rails 6 are directly placed on the floor panel 3. This means that the floor panel 3 is directly interposed between the seat rails 6 and the battery outer cross members 8. Therefore, the floor panel 3 is fixed to the battery outer cross members 8 and the inner members 725 to 727 which are fixed to each other and hence, membrane vibration of the floor panel 3 is suppressed.

In the vehicle 1 to which the lower vehicle-body structure according to the present embodiment is applied, the battery outer cross members 8 are formed to extend in the vehicle width direction, and the inner members 725 to 727 are formed to extend in the front-rear direction and hence, in a side collision, the battery outer cross members 8, in cooperation with the inner members 725 to 727, can resist against a collision load input to the battery outer cross members 8 and, in a front collision, the inner members 725 to 727, in cooperation with the battery outer cross members 8, can resist against a collision load input to the inner members 725 to 727. Therefore, the vehicle 1 can ensure high safety in both a front collision and a side collision.

In the vehicle 1 to which the lower vehicle-body structure according to the present embodiment is applied, the left and right members (outer peripheral walls) 723 and 724 of the housing body portion 72 of the battery housing 71 are disposed in such a way as to be in contact with or proximate to the side sills 2 and hence, a collision load input to the side sill 2 in a side collision is dispersed to the inner members 725 to 727 and the battery outer cross members 8 via the members 721 to 724, which constitute the outer peripheral walls of the battery housing 71. Therefore, the vehicle 1 has an advantage in ensuring high safety in a side collision.

In the vehicle 1 to which the lower vehicle-body structure according to the present embodiment is applied, each of the left and right members (outer peripheral walls) 723 and 724 of the housing body portion 72 of the battery housing 71 includes the outwardly-projecting portion 723a, and the outwardly-projecting portion 723a is disposed in such a way as to be in contact with or proximate to the lower surface of the side sill 2 and hence, it is possible to suppress vertical movement of the battery 7 during traveling or other movement of the vehicle. In the vehicle 1, the vertical movement of the battery 7 can be suppressed during traveling or other movement of the vehicle and hence, it is possible to suppress membrane vibration of the floor panel 3 which is fixed to the battery housing 71 via the battery outer cross members 8. Accordingly, the vehicle 1 can suppress vibrations in the vehicle cabin portion 1b, thus ensuring high comfort of the occupant.

In the vehicle 1 to which the lower vehicle-body structure according to the present embodiment is applied, the inner members 725 to 727 are fixed to the front and rear members (outer peripheral walls) 721 and 722 of the housing body portion 72 of the battery housing 71 and hence, it is possible to ensure high rigidity of the housing body portion 72.

In addition, the inner members 725 to 727 are fixed to the front and rear members 721 and 722 of the housing body portion 72 and hence, it is possible to suppress a situation in which the battery cells 70 housed in the battery housing 71 are damaged or the like in a collision of a vehicle.

Further, in the vehicle 1, the inner members 725 to 727 are constituted as separate bodies from the housing body portion 72 and hence, it is possible to define the positions of the inner members 725 to 727 relative to the housing body portion 72 depending on the arrangement of the battery cells 70 in the battery 7, the shape of the housing body portion 72, or the like. Therefore, the standardized inner members 725 to 727 can be fixed to the battery 7 having any of various shapes and hence, it is possible to achieve a reduction in manufacturing costs.

As has been described above, the vehicle 1 to which the lower vehicle-body structure according to the present embodiment is applied can both ensure safety when a collision load is input and ensure a high degree of freedom in design relating to arrangement of the vehicle seats 4 in the vehicle cabin portion 1b.

### [Modification]

In the above-mentioned embodiment, the battery outer cross members 8 are provided as separate bodies from the lid portion 73 of the battery housing 71. However, the present invention may also adopt a configuration in which the outer skeleton portions are integrally formed with the lid portion of the battery housing.

In the above-mentioned embodiment, the inner members 725 to 727 are fixed to the front and rear members 721 and 722 of the housing body portion 72. However, in the present invention, it is not always necessary to fix the inner skeleton portions to the outer peripheral walls of the housing body portion. Provided that a load can be transmitted, the inner skeleton portions may be in contact with or proximate to the outer peripheral walls of the housing body portion.

In the above-mentioned embodiment, of the front and rear vehicle seats 4 and 5, each of the front vehicle seats 4 includes the seat rails 6, and is slidable in the front-rear direction. However, the present invention may also have a configuration in which the rear vehicle seat includes seat rails, and is slidable in the front-rear direction. In such a case, by also fixing the seat rails included in the rear vehicle seat to the outer skeleton portions, it is possible to obtain advantageous effects substantially equal to the above-mentioned advantageous effects.

In the above-mentioned embodiment, the two battery outer cross members 8 and the three inner members 725 to 727 are provided. However, in the present invention, it is sufficient that at least one outer skeleton portion and at least one inner skeleton portion be provided.

In the above-mentioned embodiment, each of the rectangular lattice structure portion HR1 and the rectangular lattice structure portion HR2 has a rectangular shape or a square shape when viewed in a plan view. However, in the present invention, these rectangular lattice structure portions may have a diamond shape, a parallelogram shape, or other shapes when viewed in a plan view. These rectangular lattice structure portions may also have a trapezoidal shape.

In the above-mentioned embodiment, the configuration is adopted in which the battery outer cross members 8 extend in the vehicle width direction, and the inner members 725 to 727 extend in the front-rear direction. However, the present invention may also adopt a configuration in which the outer skeleton portions extend in the front-rear direction, and the inner skeleton portions extend in the vehicle width direction.

In the above-mentioned embodiment, each of the left and right members 723 and 724 of the housing body portion 72 includes the outwardly-projecting portion 723a. However, in the present invention, it is not always necessary for the housing body portion to include the outwardly-projecting portion.

In the above-mentioned embodiment, although a material for constituting the battery outer cross members 8 or the inner members 725 to 727 is not particularly mentioned, any material can be adopted provided that the material can be used as a skeleton member of a vehicle. For example, a metal material, such as a steel material or an aluminum alloy, or a resin material, such as a carbon fiber reinforced resin, may be used.

### [Reference Signs List]

- 1: vehicle
- 2: side sill
- 3: floor panel
- 4: seat
- 6: seat rail
- 7: battery
- 8: battery outer cross member (outer skeleton portion)
- 71: battery housing
- 72: housing body portion
- 73: lid lid portion
- 725 to 727: inner member (inner skeleton portion)
- HR1, HR2: rectangular lattice structure portion
- JP1, JP2: fixed portion

## Claims

1. A lower vehicle-body structure of a vehicle, the lower vehicle-body structure comprising:
a floor panel (3) that constitutes a floor of a vehicle cabin of the vehicle;
a vehicle seat (4) that includes a seat rail (6) disposed on the floor panel (3);
an outer skeleton portion (8) that is formed to extend in a first direction, and that is disposed below the floor panel (3), the first direction being either one of a front-rear direction of the vehicle or a vehicle width direction; and
a battery (7) that includes a battery cell (70) and a battery housing (71) accommodating the battery cell (70), and that is disposed below the outer skeleton portion (8), wherein
the battery housing (71) includes a housing body portion (72), a lid portion (73), and an inner skeleton portion (725 - 727), the housing body portion (72) being a casing that includes an outer peripheral wall (721 - 724) and that has an opening on an upper side of the casing, the lid portion (73) closing the opening of the housing body portion (72), the inner skeleton portion (725 - 727) extending in a second direction in the housing body portion (72), and being formed in such a way as to connect opposing portions (721, 722) of the outer peripheral wall (721 - 724), the second direction intersecting with both an up-down direction of the vehicle and the first direction, and
the outer skeleton portion (8) is fixed to the inner skeleton portion (725 - 727) with the lid portion (73) interposed between the outer skeleton portion (8) and the inner skeleton portion (725 - 727), and is fixed to the seat rail (6) with the floor panel (3) interposed between the outer skeleton portion (8) and the seat rail (6).

2. The lower vehicle-body structure of a vehicle according to claim 1, further comprising
a second outer skeleton portion (8), assuming the outer skeleton portion as a first outer skeleton portion (8), the second outer skeleton portion (8) being an outer skeleton portion that is disposed between the floor panel (3) and the battery housing (71), and that is different from the first outer skeleton portion (8), the second outer skeleton portion (8) extending in the first direction, and being disposed with a distance from the first outer skeleton portion (8) in the second direction, wherein
assuming the inner skeleton portion (725 - 727) as a first inner skeleton portion (725 - 727), the battery housing further includes a second inner skeleton portion (725 - 727) that is disposed in the housing body portion (72), that extends in the second direction, that is distant from the first inner skeleton portion (725 - 727) in the first direction, and that is formed in such a way as to connect the opposing portions (721, 722) of the outer peripheral wall (721 - 724) of the housing body portion (72),
the second inner skeleton portion (721 - 724) is fixed to the first outer skeleton portion (8) and the second outer skeleton portion (8) with the lid portion (73) interposed between the second inner skeleton portion (721 - 724) and the first outer skeleton portion (8), and with the lid portion (73) interposed between the second inner skeleton portion (721 - 724) and the second outer skeleton portion (8), and
the second outer skeleton portion (8) is fixed to the first inner skeleton portion (721 - 724) with the lid portion (73) interposed between the second outer skeleton portion (8) and the first inner skeleton portion (721 - 724), and is fixed to the seat rail (6) with the floor panel (3) interposed between the second outer skeleton portion (8) and the seat rail (6).

3. The lower vehicle-body structure of a vehicle according to claim 1 or 2, wherein
the outer skeleton portion (8) is a separate body from the lid portion (73) of the battery housing (71), and is directly placed on the lid portion (73).

4. The lower vehicle-body structure of a vehicle according to any one of claims 1 to 3, wherein
the seat rail (6) is directly placed on the floor panel (3).

5. The lower vehicle-body structure of a vehicle according to any one of claim 1 to claim 4, wherein
the first direction is the vehicle width direction, and
the second direction is the front-rear direction.

6. The lower vehicle-body structure of a vehicle according to claim 5, wherein
the outer peripheral wall of the housing body portion (72) is disposed in such a way as to be in contact with or proximate to side sills (2) in the first direction, the side sills (2) being disposed on both sides in the vehicle width direction.

7. The lower vehicle-body structure of a vehicle according to claim 6, wherein
the outer peripheral wall includes an outwardly-projecting portion (723a) that is in contact with or proximate to a lower surface of the side sill (2).

8. The lower vehicle-body structure of a vehicle according to any one of claim 1 to claim 7, wherein
the inner skeleton portion (725 - 727) is a separate body from the housing body portion (72) of the battery housing (71), and is fixed to the outer peripheral wall of the housing body portion (72).

9. The lower vehicle-body structure of a vehicle according to any one of the preceding claims, wherein the inner skeleton portion is located between two rows of battery cells when viewed in top view and/or placed on and/or connected to a bottom panel of the housing body portion of the battery casing.

10. The lower vehicle-body structure of a vehicle according to any one of the preceding claims, wherein an upper surface of the inner skeleton portion (725 - 727) does not directly come into contact with the lower surface of the lid portion (73).

11. The lower vehicle-body structure of a vehicle according to any one of the preceding claims,
wherein the inner skeleton portion (725 - 727) is connected by a bolt (729) inserted through the outer skeleton portion (8) and fastened to a female screw thread provided in a collar (728) provided on the inner skeleton portion (725 - 727),
wherein preferably, a gap (G) is formed between the upper surface of the collar (728) and the lower surface of the lid portion (73).

12. The lower vehicle-body structure of a vehicle according to claim 10, wherein an opening portion (8a) is provided at an upper portion of outer skeleton portion (8) and/or the floor panel (3) for inserting the bolt (729).

13. The lower vehicle-body structure of a vehicle according to any one of the preceding claims, wherein the seat rail (6) is secured to the outer skeleton portion (8) by a bolt (61) threadedly engaged with a nut (81), wherein preferably, one of the bolt (61) and the nut (81) is inserted from an opening portion (6b) provided at an upper portion of the seat rail (6) and the other one of the bolt (61) and the nut (81) is inserted from an opening portion (8b) provided at the lower portion of the outer skeleton portion (8).

14. A vehicle comprising a lower vehicle-body structure of a vehicle according to any one of the preceding claims.

15. A method for manufacturing a lower vehicle-body structure of a vehicle according to any one of claims 1 to 13 or a vehicle according to claim 14, comprising the steps of:
- connecting the seat rail (6) to the outer skeleton portion (8) with the floor panel (3) interposed between the outer skeleton portion (8) and the seat rail (6), and then
- connecting the outer skeleton portion (8) to the inner skeleton portion (725 - 727) with the lid portion (73) interposed between the outer skeleton portion (8) and the inner skeleton portion (725 - 727),
wherein preferably,
the outer skeleton portion (8) is connected to the inner skeleton portion (725 - 727) by a bolt (729) inserted through an opening in the floor panel (3).

## Patentansprüche

1. Untere Fahrzeugkarosseriestruktur eines Fahrzeugs, wobei die untere Fahrzeugkarosseriestruktur umfasst:
ein Bodenblech (3), das einen Boden einer Fahrgastzelle des Fahrzeugs bildet;
einen Fahrzeugsitz (4), der eine auf dem Bodenblech (3) angeordnete Sitzschiene (6) umfasst;
einen äußeren Skelettabschnitt (8), der sich in einer ersten Richtung erstreckend ausgebildet und unterhalb des Bodenblechs (3) angeordnet ist, wobei die erste Richtung entweder eine Vorne-Hinten-Richtung des Fahrzeugs oder eine Fahrzeugbreitenrichtung ist; und
eine Batterie (7), die eine Batteriezelle (70) und ein die Batteriezelle (70) aufnehmendes Batteriegehäuse (71) umfasst und unterhalb des äußeren Skelettabschnitts (8) angeordnet ist, wobei das Batteriegehäuse (71) einen Gehäusekörperabschnitt (72), einen Deckelabschnitt (73) und einen inneren Skelettabschnitt (725-727) umfasst, wobei der Gehäusekörperabschnitt (72) ein Gehäuse ist, das eine äußere Umfangswand (721-724) aufweist und an einer Oberseite des Gehäuses eine Öffnung aufweist, wobei der Deckelabschnitt (73) die Öffnung des Gehäusekörperabschnitts (72) verschließt, wobei sich der innere Skelettabschnitt (725-727) in einer zweiten Richtung in dem Gehäusekörperabschnitt (72) erstreckt und derart ausgebildet ist, dass er einander gegenüberliegende Abschnitte (721, 722) der äußeren Umfangswand (721-724) verbindet, wobei die zweite Richtung sowohl eine Oben-Unten-Richtung des Fahrzeugs als auch die erste Richtung schneidet, und der äußere Skelettabschnitt (8) an dem inneren Skelettabschnitt (725-727) befestigt ist, wobei der Deckelabschnitt (73) zwischen dem äußeren Skelettabschnitt (8) und dem inneren Skelettabschnitt (725-727) angeordnet ist, und an der Sitzschiene (6) befestigt ist, wobei das Bodenblech (3) zwischen dem äußeren Skelettabschnitt (8) und der Sitzschiene (6) angeordnet ist.

2. Untere Fahrzeugkarosseriestruktur eines Fahrzeugs nach Anspruch 1, ferner umfassend einen zweiten äußeren Skelettabschnitt (8), wobei, wenn der äußere Skelettabschnitt als erster äußerer Skelettabschnitt (8) angenommen wird, der zweite äußere Skelettabschnitt (8) ein äußerer Skelettabschnitt ist, der zwischen dem Bodenblech (3) und dem Batteriegehäuse (71) angeordnet und von dem ersten äußeren Skelettabschnitt (8) verschieden ist, wobei sich der zweite äußere Skelettabschnitt (8) in der ersten Richtung erstreckt und mit einem Abstand zu dem ersten äußeren Skelettabschnitt (8) in der zweiten Richtung angeordnet ist, wobei wenn der innere Skelettabschnitt (725-727) als erster innerer Skelettabschnitt (725-727) angenommen wird, das Batteriegehäuse ferner einen zweiten inneren Skelettabschnitt (725-727) umfasst, der in dem Gehäusekörperabschnitt (72) angeordnet ist, sich in der zweiten Richtung erstreckt, von dem ersten inneren Skelettabschnitt (725-727) in der ersten Richtung beabstandet ist und derart ausgebildet ist, dass er die einander gegenüberliegenden Abschnitte (721, 722) der äußeren Umfangswand (721-724) des Gehäusekörperabschnitts (72) verbindet,
der zweite innere Skelettabschnitt (725-727) an dem ersten äußeren Skelettabschnitt (8) und dem zweiten äußeren Skelettabschnitt (8) befestigt ist, wobei der Deckelabschnitt (73) zwischen dem zweiten inneren Skelettabschnitt (725-727) und dem ersten äußeren Skelettabschnitt (8) sowie zwischen dem zweiten inneren Skelettabschnitt (725-727) und dem zweiten äußeren Skelettabschnitt (8) angeordnet ist, und
der zweite äußere Skelettabschnitt (8) an dem ersten inneren Skelettabschnitt (725-727) befestigt ist, wobei der Deckelabschnitt (73) zwischen dem zweiten äußeren Skelettabschnitt (8) und dem ersten inneren Skelettabschnitt (725-727) angeordnet ist, und an der Sitzschiene (6) befestigt ist, wobei das Bodenblech (3) zwischen dem zweiten äußeren Skelettabschnitt (8) und der Sitzschiene (6) angeordnet ist.

3. Untere Fahrzeugkarosseriestruktur eines Fahrzeugs nach Anspruch 1 oder 2, wobei der äußere Skelettabschnitt (8) ein von dem Deckelabschnitt (73) des Batteriegehäuses (71) getrennter Körper ist und direkt auf dem Deckelabschnitt (73) angeordnet ist.

4. Untere Fahrzeugkarosseriestruktur eines Fahrzeugs nach einem der Ansprüche 1 bis 3, wobei die Sitzschiene (6) direkt auf dem Bodenblech (3) angeordnet ist.

5. Untere Fahrzeugkarosseriestruktur eines Fahrzeugs nach einem der Ansprüche 1 bis 4, wobei die erste Richtung die Fahrzeugbreitenrichtung ist und die zweite Richtung die Vorne-Hinten-Richtung ist.

6. Untere Fahrzeugkarosseriestruktur eines Fahrzeugs nach Anspruch 5, wobei die äußere Umfangswand des Gehäusekörperabschnitts (72) derart angeordnet ist, dass sie in der ersten Richtung mit Seitenschwellern (2) in Kontakt steht oder diesen benachbart ist, wobei die Seitenschweller (2) auf beiden Seiten in der Fahrzeugbreitenrichtung angeordnet sind.

7. Untere Fahrzeugkarosseriestruktur eines Fahrzeugs nach Anspruch 6, wobei die äußere Umfangswand einen nach außen vorstehenden Abschnitt (723a) umfasst, der mit einer Unterseite des Seitenschwellers (2) in Kontakt steht oder dieser benachbart ist.

8. Untere Fahrzeugkarosseriestruktur eines Fahrzeugs nach einem der Ansprüche 1 bis 7, wobei der innere Skelettabschnitt (725-727) ein von dem Gehäusekörperabschnitt (72) des Batteriegehäuses (71) getrennter Körper ist und an der äußeren Umfangswand des Gehäusekörperabschnitts (72) befestigt ist.

9. Untere Fahrzeugkarosseriestruktur eines Fahrzeugs nach einem der vorhergehenden Ansprüche, wobei der innere Skelettabschnitt in Draufsicht zwischen zwei Reihen von Batteriezellen angeordnet ist und/oder auf einer Bodenplatte des Gehäusekörperabschnitts des Batteriegehäuses angeordnet und/oder mit dieser verbunden ist.

10. Untere Fahrzeugkarosseriestruktur eines Fahrzeugs nach einem der vorhergehenden Ansprüche, wobei eine Oberseite des inneren Skelettabschnitts (725-727) nicht direkt mit der Unterseite des Deckelabschnitts (73) in Kontakt kommt.

11. Untere Fahrzeugkarosseriestruktur eines Fahrzeugs nach einem der vorhergehenden Ansprüche, wobei der innere Skelettabschnitt (725-727) durch eine Schraube (729) verbunden ist, die durch den äußeren Skelettabschnitt (8) eingeführt und an einem Innengewinde befestigt ist, das in einer an dem inneren Skelettabschnitt (725-727) vorgesehenen Hülse (728) vorgesehen ist, wobei vorzugsweise ein Spalt (G) zwischen der Oberseite der Hülse (728) und der Unterseite des Deckelabschnitts (73) ausgebildet ist.

12. Untere Fahrzeugkarosseriestruktur eines Fahrzeugs nach Anspruch 10, wobei ein Öffnungsabschnitt (8a) an einem oberen Abschnitt des äußeren Skelettabschnitts (8) und/oder des Bodenblechs (3) zum Einführen der Schraube (729) vorgesehen ist.

13. Untere Fahrzeugkarosseriestruktur eines Fahrzeugs nach einem der vorhergehenden Ansprüche, wobei die Sitzschiene (6) durch eine Schraube (61), die mit einer Mutter (81) in Gewindeeingriff steht, an dem äußeren Skelettabschnitt (8) befestigt ist, wobei vorzugsweise eines von der Schraube (61) und der Mutter (81) aus einem an einem oberen Abschnitt der Sitzschiene (6) vorgesehenen Öffnungsabschnitt (6b) eingeführt ist und das andere von der Schraube (61) und der Mutter (81) aus einem an dem unteren Abschnitt des äußeren Skelettabschnitts (8) vorgesehenen Öffnungsabschnitt (8b) eingeführt ist.

14. Fahrzeug, umfassend eine untere Fahrzeugkarosseriestruktur eines Fahrzeugs nach einem der vorhergehenden Ansprüche.

15. Verfahren zum Herstellen einer unteren Fahrzeugkarosseriestruktur eines Fahrzeugs nach einem der Ansprüche 1 bis 13 oder eines Fahrzeugs nach Anspruch 14, umfassend die Schritte:
Verbinden der Sitzschiene (6) mit dem äußeren Skelettabschnitt (8), wobei das Bodenblech (3) zwischen dem äußeren Skelettabschnitt (8) und der Sitzschiene (6) angeordnet ist, und danach Verbinden des äußeren Skelettabschnitts (8) mit dem inneren Skelettabschnitt (725-727), wobei der Deckelabschnitt (73) zwischen dem äußeren Skelettabschnitt (8) und dem inneren Skelettabschnitt (725-727) angeordnet ist,
wobei vorzugsweise der äußere Skelettabschnitt (8) mit dem inneren Skelettabschnitt (725-727) durch eine Schraube (729) verbunden wird, die durch eine Öffnung in dem Bodenblech (3) eingeführt wird.

## Revendications

1. Structure de partie inférieure de caisse d'un véhicule, la structure de partie inférieure de caisse comprenant :
un panneau de plancher (3) qui constitue un plancher d'un habitacle du véhicule ;
un siège de véhicule (4) qui comprend un rail de siège (6) disposé sur le panneau de plancher (3) ;
une partie de squelette extérieure (8) qui est formée de manière à s'étendre dans une première direction et qui est disposée sous le panneau de plancher (3), la première direction étant soit une direction avant-arrière du véhicule, soit une direction de largeur du véhicule ; et
une batterie (7) qui comprend une cellule de batterie (70) et un boîtier de batterie (71) logeant la cellule de batterie (70), et qui est disposée sous la partie de squelette extérieure (8), dans laquelle
le boîtier de batterie (71) comprend une partie de corps de boîtier (72), une partie de couvercle (73) et une partie de squelette intérieure (725-727), la partie de corps de boîtier (72) étant un carter qui comprend une paroi périphérique extérieure (721-724) et qui présente une ouverture sur un côté supérieur du carter, la partie de couvercle (73) fermant l'ouverture de la partie de corps de boîtier (72), la partie de squelette intérieure (725-727) s'étendant dans une deuxième direction dans la partie de corps de boîtier (72) et étant formée de manière à relier des parties opposées (721, 722) de la paroi périphérique extérieure (721-724), la deuxième direction croisant à la fois une direction haut-bas du véhicule et la première direction, et la partie de squelette extérieure (8) est fixée à la partie de squelette intérieure (725-727), la partie de couvercle (73) étant interposée entre la partie de squelette extérieure (8) et la partie de squelette intérieure (725-727), et est fixée au rail de siège (6), le panneau de plancher (3) étant interposé entre la partie de squelette extérieure (8) et le rail de siège (6).

2. Structure de partie inférieure de caisse d'un véhicule selon la revendication 1, comprenant en outre
une deuxième partie de squelette extérieure (8), la partie de squelette extérieure étant supposée être une première partie de squelette extérieure (8), la deuxième partie de squelette extérieure (8) étant une partie de squelette extérieure qui est disposée entre le panneau de plancher (3) et le boîtier de batterie (71) et qui est différente de la première partie de squelette extérieure (8), la deuxième partie de squelette extérieure (8) s'étendant dans la première direction et étant disposée à distance de la première partie de squelette extérieure (8) dans la deuxième direction, dans laquelle
la partie de squelette intérieure (725-727) étant supposée être une première partie de squelette intérieure (725-727), le boîtier de batterie comprend en outre une deuxième partie de squelette intérieure (725-727) qui est disposée dans la partie de corps de boîtier (72), qui s'étend dans la deuxième direction, qui est à distance de la première partie de squelette intérieure (725-727) dans la première direction et qui est formée de manière à relier les parties opposées (721, 722) de la paroi périphérique extérieure (721-724) de la partie de corps de boîtier (72),
la deuxième partie de squelette intérieure (725-727) est fixée à la première partie de squelette extérieure (8) et à la deuxième partie de squelette extérieure (8), la partie de couvercle (73) étant interposée entre la deuxième partie de squelette intérieure (725-727) et la première partie de squelette extérieure (8), et la partie de couvercle (73) étant interposée entre la deuxième partie de squelette intérieure (725-727) et la deuxième partie de squelette extérieure (8), et
la deuxième partie de squelette extérieure (8) est fixée à la première partie de squelette intérieure (725-727), la partie de couvercle (73) étant interposée entre la deuxième partie de squelette extérieure (8) et la première partie de squelette intérieure (725-727), et est fixée au rail de siège (6), le panneau de plancher (3) étant interposé entre la deuxième partie de squelette extérieure (8) et le rail de siège (6).

3. Structure de partie inférieure de caisse d'un véhicule selon la revendication 1 ou 2, dans laquelle la partie de squelette extérieure (8) est un corps séparé de la partie de couvercle (73) du boîtier de batterie (71) et est placée directement sur la partie de couvercle (73).

4. Structure de partie inférieure de caisse d'un véhicule selon l'une quelconque des revendications 1 à 3, dans laquelle le rail de siège (6) est placé directement sur le panneau de plancher (3).

5. Structure de partie inférieure de caisse d'un véhicule selon l'une quelconque des revendications 1 à 4, dans laquelle la première direction est la direction de largeur du véhicule et la deuxième direction est la direction avant-arrière.

6. Structure de partie inférieure de caisse d'un véhicule selon la revendication 5, dans laquelle la paroi périphérique extérieure de la partie de corps de boîtier (72) est disposée de manière à être en contact avec des bas de caisse (2) ou à proximité de ceux-ci dans la première direction, les bas de caisse (2) étant disposés des deux côtés dans la direction de largeur du véhicule.

7. Structure de partie inférieure de caisse d'un véhicule selon la revendication 6, dans laquelle la paroi périphérique extérieure comprend une partie faisant saillie vers l'extérieur (723a) qui est en contact avec une surface inférieure du bas de caisse (2) ou à proximité de celle-ci.

8. Structure de partie inférieure de caisse d'un véhicule selon l'une quelconque des revendications 1 à 7, dans laquelle la partie de squelette intérieure (725-727) est un corps séparé de la partie de corps de boîtier (72) du boîtier de batterie (71) et est fixée à la paroi périphérique extérieure de la partie de corps de boîtier (72).

9. Structure de partie inférieure de caisse d'un véhicule selon l'une quelconque des revendications précédentes, dans laquelle la partie de squelette intérieure est située entre deux rangées de cellules de batterie vue de dessus et/ou est placée sur un panneau de fond de la partie de corps de boîtier du boîtier de batterie et/ou reliée à celui-ci.

10. Structure de partie inférieure de caisse d'un véhicule selon l'une quelconque des revendications précédentes, dans laquelle une surface supérieure de la partie de squelette intérieure (725-727) ne vient pas directement en contact avec la surface inférieure de la partie de couvercle (73).

11. Structure de partie inférieure de caisse d'un véhicule selon l'une quelconque des revendications précédentes, dans laquelle la partie de squelette intérieure (725-727) est reliée par un boulon (729) inséré à travers la partie de squelette extérieure (8) et serré sur un filetage femelle prévu dans un manchon (728) prévu sur la partie de squelette intérieure (725-727), dans laquelle, de préférence, un interstice (G) est formé entre la surface supérieure du manchon (728) et la surface inférieure de la partie de couvercle (73).

12. Structure de partie inférieure de caisse d'un véhicule selon la revendication 10, dans laquelle une partie d'ouverture (8a) est prévue au niveau d'une partie supérieure de la partie de squelette extérieure (8) et/ou du panneau de plancher (3) pour insérer le boulon (729).

13. Structure de partie inférieure de caisse d'un véhicule selon l'une quelconque des revendications précédentes, dans laquelle le rail de siège (6) est fixé à la partie de squelette extérieure (8) par un boulon (61) en prise par vissage avec un écrou (81), dans laquelle, de préférence, l'un du boulon (61) et de l'écrou (81) est inséré à partir d'une partie d'ouverture (6b) prévue au niveau d'une partie supérieure du rail de siège (6) et l'autre du boulon (61) et de l'écrou (81) est inséré à partir d'une partie d'ouverture (8b) prévue au niveau de la partie inférieure de la partie de squelette extérieure (8).

14. Véhicule comprenant une structure de partie inférieure de caisse d'un véhicule selon l'une quelconque des revendications précédentes.

15. Procédé de fabrication d'une structure de partie inférieure de caisse d'un véhicule selon l'une quelconque des revendications 1 à 13 ou d'un véhicule selon la revendication 14, comprenant les étapes consistant à :
relier le rail de siège (6) à la partie de squelette extérieure (8), le panneau de plancher (3) étant interposé entre la partie de squelette extérieure (8) et le rail de siège (6), puis
relier la partie de squelette extérieure (8) à la partie de squelette intérieure (725-727), la partie de couvercle (73) étant interposée entre la partie de squelette extérieure (8) et la partie de squelette intérieure (725-727),
dans lequel, de préférence, la partie de squelette extérieure (8) est reliée à la partie de squelette intérieure (725-727) par un boulon (729) inséré à travers une ouverture dans le panneau de plancher (3).
